# EUROPEAN PATENT APPLICATION

(11) **EP 4 776 535 A1**
(43) Date of publication of application: **15.07.2026**
(21) Application number: 25386002.7
(22) Date of filing: 14.01.2025
(51) Int. Cl.: H04J 14/02, H04Q 11/00

(54) **NETWORK ARCHITECTURE**

(71) Applicant: Oriole Networks Ltd, London EC1Y 2AA (GB)
(72) Inventor: Zervas, George, London, EC1Y 2AA (GB); Benjamin, Joshua, London, EC1Y 2AA (GB); Ottino, Alessandro, London, EC1Y 2AA (GB)
(74) Representative: Gill Jennings & Every LLP

(57) **Abstract**

An optical circuit-switched network (400) is provided. The optical circuit-switched network (400) comprises a plurality of node clusters (402), each comprising a plurality of nodes (404) including at least one inter-cluster node, each node (404) within a node cluster (402) being in optical communication with a plurality of intra-cluster arrayed waveguide routers , AWGRs (406), and at least one intra-cluster data scheduling unit, DSU (408). The optical circuit-switched network (400) also comprises at least one inter-cluster AWGR (410) and at least one inter-cluster DSU.

## Description

### FIELD OF THE INVENTION

The present invention relates to a network architecture for an optical circuit-switched network.

### BACKGROUND

Current electronically packet switched (EPS) networks are unable to meet the capacity and performance requirements needed by an increasing number of computing applications. Indeed, in some cases, the EPS network itself is the bottleneck in performance, thus making EPS networks unfeasible for certain applications due to network bottlenecks introduced by switch bandwidth oversubscription, queueing in the network and scaling limitations of capacity in electronic transceivers.

Optical circuit switched networks have been proposed as an alternative to EPS networks for certain applications. However, for applications such as high-performance computing or dynamic circuit network applications there is a desire to improve performance regarding bandwidth, scalability, circuit reconfiguration speed or time, node-to-node capacity, connectivity, and reliability and fault tolerance.

The present invention seeks to overcome the above problems.

### SUMMARY OF INVENTION

In accordance with a first aspect of the present disclosure, there is provided an optical circuit-switched network. The optical circuit-switched network comprises:
a plurality of node clusters, each comprising a plurality of nodes including at least one inter-cluster node adapted for inter-cluster communication with at least one node from another node cluster, each node within a node cluster being in optical communication with a plurality of intra-cluster arrayed waveguide routers, AWGRs, configured to facilitate direct communication between nodes within the same node cluster, and each node within a node cluster being in communication with at least one intra-cluster data scheduling unit, DSU, configured to provide intra-cluster instructions to a source node and a destination node in response to an intra-cluster request from the source node, the intra-cluster request being for connection from the source node in a node cluster to the destination node in the same node cluster;
at least one inter-cluster AWGR, each being in optical communication with at least two inter-cluster nodes of different node clusters, the at least one inter-cluster AWGR being configured to facilitate direct communication between the at least two inter-cluster nodes of different node clusters; and
at least one inter-cluster DSU configured to provide inter-cluster instructions to a source inter-cluster node and destination inter-cluster node in response to an inter-cluster request from the source inter-cluster node, the inter-cluster request being for connection from the source inter-cluster node in one node cluster to the destination inter-cluster node in another node cluster.

An optical circuit-switched network may be understood as a communication network that establishes dedicated optical channels (light paths) for transmitting data between endpoints (nodes). The network utilises circuit switching, where an optical channel is established and maintained for the entire duration of a transmission session between a source node and a destination node. A "node" may be understood as a component of the network that is configured to transmit, and receive, data. For example, a node may be a piece of hardware housed in a rack-mounted device and may be part of a server. The term "direct communication" may be understood as communication over a single channel without any intermediate nodes.

Each node in a particular node cluster is capable of direct communication with a node within the same node cluster via an intra-cluster AWGR. Each inter-cluster node of a particular node cluster is capable of direct communication with at least one inter-cluster node of another node cluster via the at least one inter-cluster AWGR. In this way, each node in every node cluster is capable of direct or indirect communication with every node in every other cluster via the inter-cluster nodes. In the context of this invention, the term "indirect communication" may be understood as a communication requiring an intermediate node. For example, a node that is not adapted for inter-cluster communication with a node from another cluster can still communicate with said node from another cluster by using an inter-cluster node as an intermediate node. Therefore, node connection or communication is not restricted to nodes that are within the same node cluster, and a network can be scaled beyond a single node cluster. The network of the present invention therefore provides an improvement in scalability over existing networks.

In some embodiments, every node of every node cluster is an inter-cluster node adapted for inter-cluster communication with one node from every other node cluster. In this way, any node can directly or indirectly communicate with a node from any other cluster. At most one intermediate node is required for communication between any node in any cluster and any other node in any other cluster. Advantageously, scalability can be improved whilst also minimising communication delays.

In some embodiments, only one node from every node cluster is an inter-cluster node adapted for inter-cluster communication with one node from every other node cluster. Therefore, any node can directly or indirectly communicate with a node from any other cluster via the inter-cluster node. At most two intermediate nodes are required for communication between any node in any cluster and any other node in any other cluster. Advantageously, scalability can be improved whilst also reducing the number of inter-cluster AWGRs required for communication between clusters.

In some embodiments, the plurality of networks comprises an inter-communication node cluster, wherein each node in the inter-communication node cluster is adapted for inter-cluster communication with one node from every other node cluster. Therefore, any node can directly or indirectly communicate with a node from any other cluster via the inter-communication node cluster. At most two intermediate nodes are required for communication between any node in any cluster and any other node in any other cluster. Advantageously, scalability can be improved whilst also reducing the number of inter-cluster AWGRs required for communication between clusters.

Preferably, each inter-cluster node adapted for inter-cluster communication comprises at least one inter-cluster output port and at least one inter-cluster input port configured for communication with the at least one inter-cluster AWGR. Therefore, inter-cluster communication can be achieved without changing the structure of the inter-cluster node. Advantageously, scalability can be achieved without making significant structural changes.

In some embodiments, the inter-cluster nodes each comprise an optical transceiver. In this way, standard nodes may be used to implement the network of the present invention. Advantageously, fewer modifications to an existing network are required.

In some embodiments, the inter-cluster nodes each comprise an optically switched path from a receiver portion to a transmit portion of the node. In this way, data can be re-transmitted without the need for electronic packet processing. Advantageously, intermediate nodes can use this technique to re-transmit (or relay) data faster.

In some embodiments, at least one intra-cluster DSU of each node cluster is in communication with at least one inter-cluster DSU. In this way, the at least one intra-cluster DSU and the at least one inter-cluster DSU can communicate to determine an appropriate optical communication pathway between nodes of different node clusters. Advantageously, cohesion between node clusters can be improved.

In some embodiments, the at least one intra-cluster DSU of a node cluster including a source node and a destination node is configured, in response to a communication request from the source node indicative of a request for connection between the source node and the destination node, to communicate with the at least one inter-cluster DSU and the at least one intra-cluster DSU of a node cluster including the destination node to generate network resource instructions, the source node and the destination node being in indirect communication. The network resource instructions may comprise wavelength, optical communication pathway, and communication timing. Advantageously, cohesion between node clusters can be improved.

In some embodiments, each inter-cluster DSU and each intra-cluster DSU comprises a primary DSU and a secondary DSU. The primary DSU is preferably configured to provide the DSU functions during normal operation, whilst the secondary DSU is preferably configured to provide the DSU functions when the primary DSU fails. Advantageously, the secondary DSU can provide redundancy.

In some embodiments, each node comprises Y optical datapaths, each optical datapath being for connection to a respective communication group of nodes within the node cluster, and each optical datapath comprising X intra-node output ports and X intra-node input ports such that each communication group comprises X racks of up to Λ nodes, wherein Λ is the number of wavelengths that can be supported by each intra-cluster AWGR.

In some embodiments, each node is comprised in a photonic integrated circuit, PIC, coupled to a network interface card, NIC. In this way, the PIC can generate and modulate optical signals on different wavelengths for connections with other nodes and the NIC can interface with the servers or other network devices, handling data from the network devices and converting it into an optical format using the PIC. Advantageously, the node can efficiently interface with the rest of the optical circuit-switched network while maintaining compatibility with electronic systems.

In accordance with a second aspect of the present disclosure, there is provided an optical circuit-switched network comprising:
a first node cluster comprising a plurality of first nodes, each being in optical communication with a plurality of first intra-cluster arrayed waveguide routers, AWGRs, configured to facilitate communication between the plurality of first nodes, and each being in communication with at least one first intra-cluster data scheduling unit, DSU, configured to provide communication instructions to one or more first nodes in response to respective one or more first intra-cluster requests from one or more first nodes, the one or more first intra-cluster requests being for connection from one first node among the plurality of first nodes to another first node among the plurality of first nodes;
a second node cluster comprising a plurality of second nodes, each being in optical communication with plurality of second intra-cluster AWGRs configured to facilitate communication between the plurality of second nodes, and each being in communication with at least one second intra-cluster DSU configured to provide communication instructions to one or more second nodes in response to respective one or more second intra-cluster requests from one or more second nodes, the one or more second intra-cluster requests being for connection from one second node among the plurality of second nodes to another second node among the plurality of second nodes;
at least one inter-cluster AWGR in optical communication with at least one first node and at least one second node, the at least one inter-cluster AWGR being configured to facilitate communication between the at least one first node and the at least one second node; and
at least one inter-cluster DSU configured to provide communication instructions to one or more first nodes and/or one or more second nodes in response to respective one or more inter-cluster requests from the one or more first nodes and/or the one or more second nodes, the one or more inter-cluster requests being for connection from one first node to one second node or one second node to one first node.

In accordance with a third aspect of the present invention, there is provided a method for communication in a network according to the first aspect. The method comprises:
sending, by a source node, an intra-cluster request to an intra-cluster data scheduling unit, DSU, the intra-cluster request being for connection from the source node in a node cluster to a destination node in the same node cluster;
providing, by the intra-cluster DSU, intra-cluster instructions to the source node and the destination node;
connecting, via an intra-cluster AWGR, the source node to the destination node;
sending, by a source inter-cluster node to an inter-cluster DSU, an inter-cluster request for connection from the source inter-cluster node in one node cluster to a destination inter-cluster node in another node cluster;
providing, by the inter-cluster DSU, inter-cluster instructions to the source inter-cluster node and the destination inter-cluster node; and
connecting, via an inter-cluster AWGR, the source inter-cluster node to the destination inter-cluster node.

In accordance with a fourth aspect of the present invention, there is provided a method for communication in a network according to the second aspect. The method comprises:
sending, by a first node of a first node cluster, an intra-cluster request to a first intra-cluster data scheduling unit, DSU, the intra-cluster request being for connection from a source first node among the plurality of first nodes to a destination first node among the plurality of first nodes;
providing, by the intra-cluster DSU, communication instructions to the source first node the destination first node;
connecting, via a first intra-cluster AWGR, the source first node to the destination first node;
sending, by a source first node to an inter-cluster DSU, an inter-cluster request for connection from the source node to a destination second node of a second node cluster; and
providing, by the inter-cluster DSU, inter-cluster instructions to the source first node and the destination second node; and
connecting, via an inter-cluster AWGR, the source first node to the destination second node.

### BRIEF DESCRIPTION OF DRAWINGS

Figure 1 schematically illustrates an example node for use in an optical circuit-switched network according to the present invention;
Figure 2 schematically illustrates an example network interface card (NIC) for implementing the node of Figure 1;
Figure 3A schematically illustrates an example optical circuit-switched network;
Figure 3B schematically illustrates an alternative representation of the network of Figure 3A including a control plane;
Figure 3C schematically illustrates a further alternative representation of the network of Figure 3A including the control plane;
Figure 4A schematically illustrates an example optical circuit-switched network according to the present invention;
Figure 4B schematically illustrates an alternative representation of the example optical circuit-switched network of Figure 4A;
Figure 5 schematically illustrates a logical topology of an alternative example optical circuit-switched network according to the present invention; and
Figure 6 schematically illustrates an alternative example optical circuit-switched network according to the present invention; and
Figure 7 illustrates an alternative node for use in an optical circuit-switched network according to the present invention.

### DETAILED DESCRIPTION

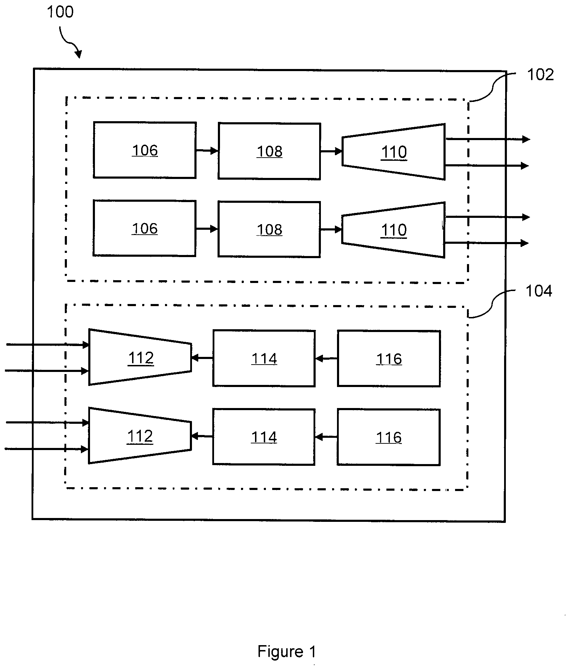

Figure 1 schematically illustrates an example node 100 for use in an optical circuit-switched network according to the present invention. The node 100 is a physical or logical entity within the network 100 at which data (in the form of light signals) can be processed, redirected, or terminated. For example, a node 100 could be associated with a data centre.

The node 100 may be thought of as having a transmit portion 102 and a receiver portion 104.

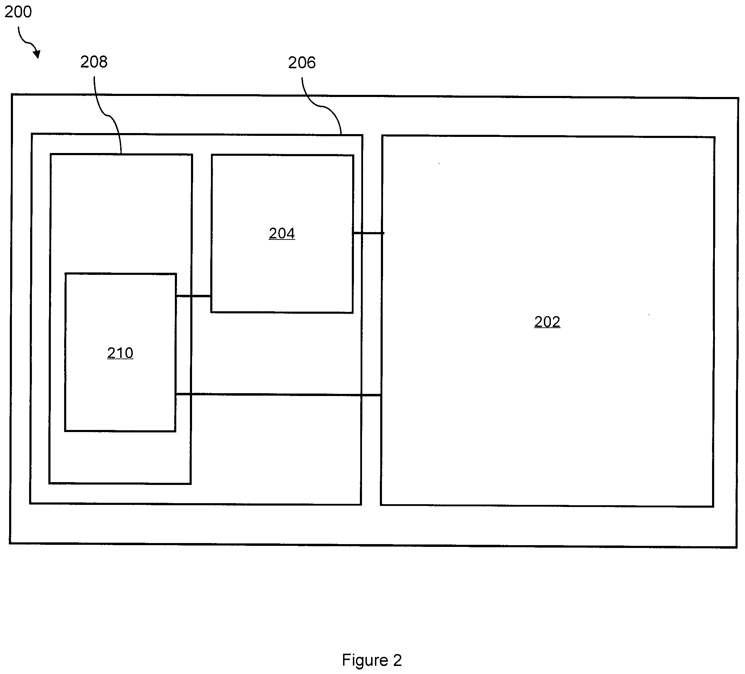

The transmit portion 102 comprises one or more (Y) independent transmit datapaths to support the connection of Y connection groups. Each transmit datapath is substantially similar, and they typically only differ by the connection group to which they can communicate, as will be discussed further below. Each transmit datapath in a node 100 comprises a wavelength-tuneable laser 106, a modulator 108, and a 1xX optical component 110. The laser 106 is typically a semiconductor laser 106 that can be tuned to very specific wavelengths (e.g., to a granularity of 36.8 nm) and preferably has a wavelength tuning time of less than 100 ns. The modulator 108 is configured to encode data onto light generated by the laser 106 to generate encoded light. The modulator 108 could be a 56 Gbaud PAM4 optical modulator 108 configured to adjust the amplitude of light output by the laser 106 to encode a symbol. The 1xX optical component 110 is an optical component comprising one input port and X output ports, such as an optical switch 110 or an optical splitter 110. The optical switch 110 is configured to receive the modulated light output by the modulator 108 and "steer" the modulated light such that it is output at one of the X output ports. Each output port is typically connected to another component, such as an output optical fibre (not shown). Whilst Figure 2 illustrates 2 output ports per optical switch 110, this number is not limiting. The number (X) of output ports per optical switch 110 could be, for example, 8. Additionally, whilst Figure 2 illustrates 2 optical switches 110, this number is not limiting. The number (Y) of optical switches 110 could be, for example 4.

The receiver portion 104 comprises one or more (Y) independent receive datapaths to support the connection of Y connection groups. Each receive datapath is substantially similar, and they typically only differ by the communication group to which they communicate, as will be discussed further below. The receive datapaths are independent of the transmit datapaths and are configured to communicate with a transmit datapath of a different node. Each receive datapath comprises an Xx1 optical component 112, a filter component 114, and a photodetection device 116. The Xx1 optical component 112 is an optical component comprising X input ports and one output port, such as an input switch 112. Each input port of the input switch 112 is configured to receive a respective optical signal, and the input switch 112 is configured to aggregate the optical signals into a single optical signal. The filter component 114 is configured to receive the optical signal output by the input switch 112 and isolate a desired wavelength or set of wavelengths. The photodetection device 116, such as a photodiode 116, is configured to receive the optical signal output by the filter component 114, and generates an electrical signal based on various properties of the received optical signal.

The elements of the transmit portion 102 and the receiver portion 104 are typically implemented as part of a photonic integrated circuit (PIC). The PIC is typically coupled to a network interface card (NIC) via a high-speed interconnect (e.g., an electrical interconnect). Figure 2 illustrates a simplified systematic diagram of an example NIC 200. The NIC 200 comprises a field-programmable gate array (FPGA) 202, a controller 204, a pluggable module 206, an optical engine 208, and a PIC 210. The FPGA 202 provides programmable logic that can be tailored to perform specific tasks in real time. The controller 204 is configured to provide control instructions to the FPGA 202 and the PIC 210. The pluggable module 206 comprises one or more optical components and their associated driver electronics and is configured to provide an installation platform for the optical engine 208. The optical engine 208 is a high-speed circuit board mounted on the pluggable module 206 and is configured to accommodate the PIC 210, along with other amplifier and driver devices. Finally, the PIC 210 includes the transmit portion 102 and receiver portion 104 and is configured to implement transmit and receive datapaths. The PIC 210 is in communication with the FPGA 202 and the controller 204, so that the controller can control the components of the transmit portion 102 and the receiver portion 104.

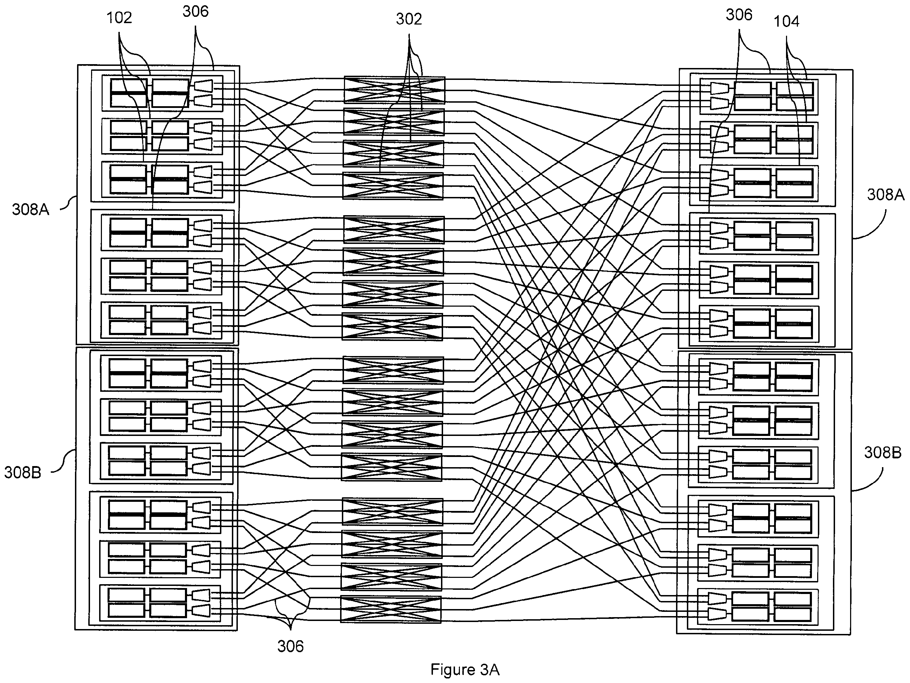

Figure 3A schematically illustrates an example optical circuit-switched network 300. The optical circuit-switched network 300 comprises a plurality of nodes 100. For simplicity, the nodes 100 are split so that the transmit portions 102 are illustrated on the leftmost side, whilst the receiver portions 104 are illustrated on the rightmost side. As discussed above, each transmit portion 102 comprises a plurality of independent transmit datapaths, each comprising a laser 106, modulator 108, and switch 110. Encoded light from the transmit portion 102 is routed to the appropriate destination (i.e., receiver portion 104), based on the wavelength of the encoded light, using an arrayed waveguide router (AWGR) 302. The AWGR 302 is in communication with the transmit portions 102 and receiver portions 104 via optical fibres 304.

The nodes 100 are arranged into a plurality of racks 306, each rack comprising a number of nodes 100 equal to the number of wavelengths Λ supported by the AWGRs 302. For example, the number of wavelengths Λ supported by the AWGRs 302 could be in the range of 2 to 64 wavelengths. In the illustrated example, the number of wavelengths Λ supported by each AWGR 302 is 3 and therefore, the number of nodes in each rack 306 is 3. Each node 100 in a rack 306 is assigned a respective wavelength. In this way, encoded light from a source node in a rack 306 to a destination node in the rack 306 can be achieved by using the wavelength assigned to the destination node.

Since each node 100 comprises at least one optical switch 110, the encoded light can be steered to one of X output ports, each being associated with a respective AWGR 302. This provides scalability beyond a single rack 306, because each AWGR 302 is associated with a different rack 306. For example, as shown in Figure 3A, the upmost transmit portion 104 comprises an upper optical switch having two output ports. The upper output port is connected to an AWGR 302 that provides communication with the upper rack 306, whilst the lower output port is connected to an AWGR 302 that provides communication with the lower rack 306. The number of racks 306 that can be reached by a single optical switch 110 is equal to the number of output ports (X). To facilitate communication with these additional racks, X² AWGRs 302 are required.

To further scale the network 300, each node 100 comprises a plurality of (Y) transmit and receive datapaths. As discussed above, each transmit datapath of a transmit portion 102 of a node 100 comprises a laser 106, a modulator 108, and an optical switch 110. Each transmit datapath provides communication to a separate communication group 308, each communication group 308 comprising a plurality of racks 306. In the illustrated network 300, each node 100 comprises Y = 2 datapaths, so that the network 300 comprises a first communication group 308A and a second communication group 308B. In the illustrated example, to communicate with the second communication group 308, a transmit portion 102 of a node 100 of the first communication group 308A utilises a transmit depicted as the lower transmit datapath. To facilitate communication between multiple communication groups 308, (XY)² AWGRs 302 are required, and 2Λ(XY)² optical fibres are required.

The number of nodes 100 supported by a network similar to the network 300 is ΛXY, because Y communication groups 308 can be supported, each communication group 308 having X racks 306, and each rack 306 having Λ nodes. As discussed above, the number of wavelengths Λ supported by each AWGR 302 can be up to 64 wavelengths, the number of racks X can up to 8, and the number of communication groups Y can be up to 4. Therefore, a maximum number of nodes in such a network can be up to 2048 nodes. Each transmit portion 102 of each node 100 of such a network 300 is in direct communication with each receiver portion 104 of each other node in the network 300. That is, each node 100 only requires passive optical components (e.g., AWGRs 302 and optical fibres 304) to communicate with other nodes 100.

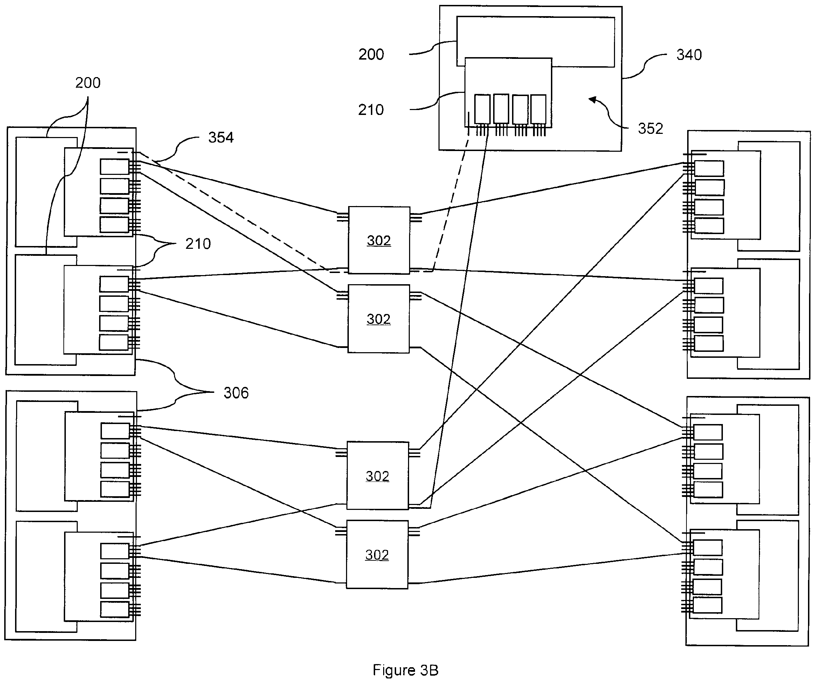

Figure 3B schematically illustrates an alternative representation of the network 300 including a control plane 340. In the illustration of Figure 3B, the nodes are depicted as a NIC 200 including (or in communication with) a PIC 210, as discussed in relation to Figure 2. The network 300 of Figure 3B is a simplified drawing showing a single communication group 308 having a plurality of racks 306. Again, for simplicity, the nodes are split so that the transmit portions 102 are illustrated on the leftmost side, whilst the receiver portions 104 are illustrated on the rightmost side. For ease of illustration, only 4 AWGRs 302 are depicted. Each PIC 210 in the illustrated embodiment comprises 4 optical datapaths, each having a switch with 4 output ports.

The control plane 340 comprises one or more data scheduling units (DSUs) 352. The DSUs 352 are configured to coordinate connections between nodes 100 on the network 300 such that each destination node 100 never receives data from more than one source node 100 at the same time. The DSUs 352 are typically substantially similar in construction to the nodes 100 in the network 300 and comprise a NIC 200 including a PIC 210. Communication between the DSU 352 and the nodes 100 can be implemented in various ways. One example involves the use of a dedicated optical datapath 354 (shown as a dashed line in Figure 3B) between each node 100 and the DSU 352. The optical datapath 354 can be implemented in the same way as the optical datapaths for communication between nodes 100, such that the optical datapath 354 includes a laser (not shown), a modulator (not shown), and an optical switch (not shown).

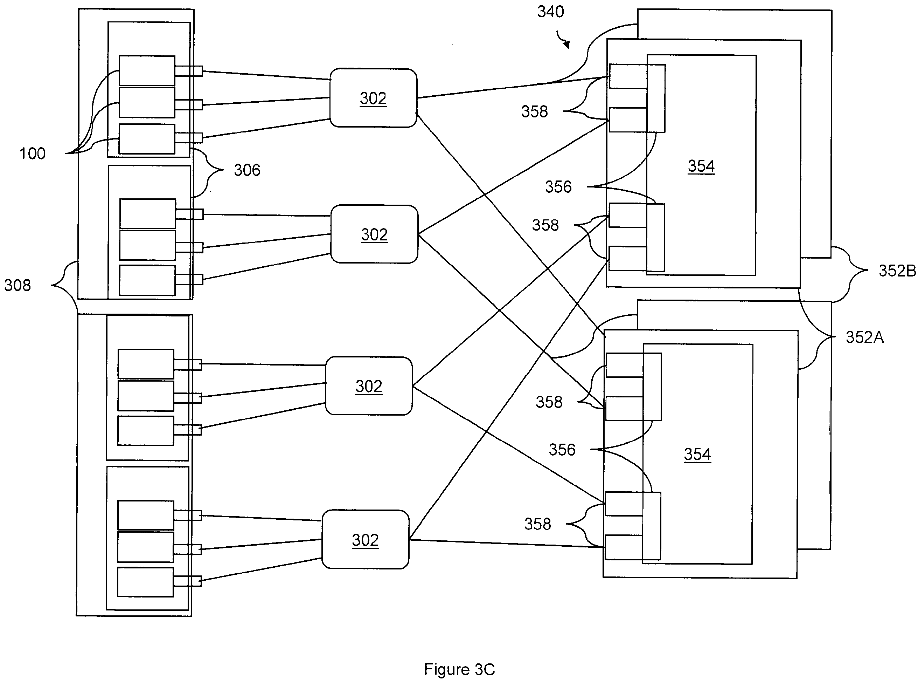

Figure 3C schematically illustrates a further alternative representation of the network 300 including the control plane 340. In this illustration of Figure 3C, two communication groups 308 are shown, although this number could be up to Y communication groups 308, depending on the number transmit datapaths on each node 100. Each of the communication groups is shown having two racks 306, although this number could be up to X, depending on the number of output ports for each optical switch of the nodes 100. Each rack is depicted as having three nodes, although this could be up to Λ, depending on the number of wavelengths supported by each AWGR 302. The control plane 340 includes N DSUs 352. There are two DSUs 352 depicted in Figure 3C, but this could be up to Λ, depending on the number of wavelengths supported by each AWGR 302. It will be appreciated that if N = Λ, no AWGRs 302 are required.

The DSU 352 is similar to the node 200 of Figure 2 and is typically implemented as a node in the network 300. The DSU 352 comprises a PIC 354 having Y optical datapaths 356. Each optical datapath include X output ports 358. The DSU 352 is configured to determine which nodes should be connected based on network traffic demands, prevent multiple nodes from attempting to use the same wavelength or optical path simultaneously, and allocate wavelengths and paths to the nodes.

In accordance with the present invention, each DSU 352 comprises a first DSU 352A and a second DSU 352B. The first DSU 352A is a primary DSU 352A that carries out most processing actions to coordinate connections between nodes. The second DSU 352B is a secondary DSU 352A that carries out the processing actions when the primary DSU 352A is unable to. Thus, the secondary DSU provides a level of redundancy.

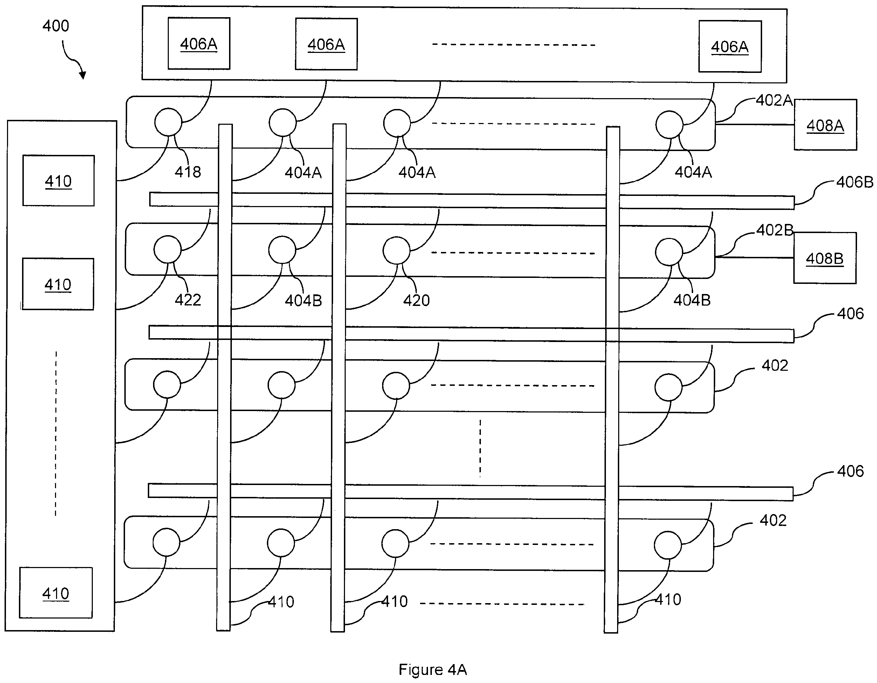

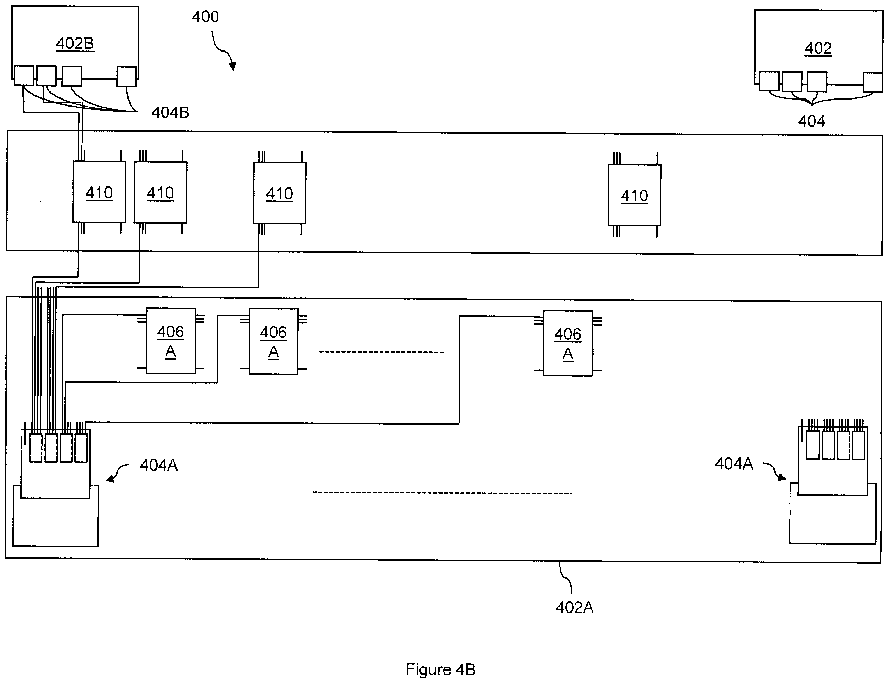

The present invention provides a means for further scaling the network 300. Figure 4A schematically illustrates an example optical circuit-switched network 400 according to the present invention. Figures 4B and 4C schematically illustrate alternative representations of the optical circuit-switched network 400.

The network 400 comprises a plurality of nodes. These nodes are separated into separate node clusters. A node cluster is similar to the network 300 of Figures 3A to 3C and may have a plurality of communication groups, each communication group comprising a plurality of racks, and each rack comprising a plurality of nodes. A key distinction between a node cluster of the network 400 and the network 300 is that at least one node of a node cluster in the network 400 is an inter-cluster node adapted for inter-cluster communication with at least one node from another cluster. Notably, the inter-cluster node is still in direct communication with all other nodes within the same node cluster. The term "direct communication" may be understood as communication being achieved by a single channel with no intermediate nodes required for communication. To achieve such direct communication, at least one output port (an inter-cluster output port) of each of the at least one inter-cluster nodes is adapted for inter-cluster communication and at least one input port (an inter-cluster input port) of an inter-cluster node of another node cluster is adapted for inter-cluster communication. An inter-cluster output port of a source node is configured to communicate with an inter-cluster AWGR to form a connection with the inter-cluster input port of a destination node located in a different node cluster.

In more detail, the network 400 comprises a plurality of node clusters 402. Each node cluster 402 comprises a plurality of nodes 404 having at least one inter-cluster node. The at least one inter-cluster node is adapted for inter-cluster communication with at least one node from another cluster. For example, the network 400 comprises a first node cluster 402A. The first node cluster 402A comprises a plurality of first nodes 404A. The first nodes 404A are substantially similar to the node 100 and each includes one or more transmit datapaths (not shown), each including a laser (not shown), a modulator (not shown), an optical switch comprising X output ports (not shown), and one or more receive datapaths (not shown), each including an input switch comprising X input ports (not shown), a filter component (not shown), and a photodetection device (not shown). The plurality of first nodes 404A comprises k first nodes 404A. The number k of first nodes 404A is dependent on the number of inter-cluster output ports used for inter-cluster, as will be discussed further below.

Each node in a node cluster is in communication with a plurality of intra-cluster AWGRs 406 configured to facilitate communication between nodes within the same node cluster. For example, each of the plurality of first nodes 404A is in optical communication with a plurality of first intra-cluster AWGRs 406A. The plurality of first nodes 404A are typically in communication with the plurality of first AWGRs 406A via optical fibres (not shown). The plurality of first AWGRs 406A are configured to facilitate communication between the plurality of first nodes 404A within the first node cluster 402A. In other words, when one first node 404A (e.g., a source node 404A) of the first node cluster 402A requests connection to another first node 404A (e.g., a destination node 404A) of the first node cluster 404A, a first AWGR 406A facilitates such a connection.

Each node within a node cluster is in communication with at least one intra-cluster data scheduling unit (DSU) 408 configured to provide intra-cluster instructions to a source node and a destination node in response to an intra-cluster request from the source node, the intra-cluster request being for connection from the source node in a node cluster to the destination node in the same node cluster. For example, each of the plurality of first nodes 404A is in communication with at least one first intra-cluster DSU 408A. The at least one first intra-cluster DSU 408A is configured to provide communication instructions to a first source node 404A in response to an intra-cluster request from the first source node 404A. The intra-cluster request is a request for connection from the first source node 404A among the plurality of first nodes 404A to a first destination node 404A among the plurality of first nodes 404A. Therefore, the intra-cluster request is a request for a connection between nodes within the same node cluster.

Continuing with the illustrated example, the network 400 also comprises a second node cluster 402B. The second node cluster 402B is substantially similar to the first node cluster 402A in that it comprises a plurality of second nodes 404B, including at least one inter-cluster node. The plurality of second nodes 404B comprises k second nodes 404B. Each of the plurality of second nodes 404B is in optical communication with plurality of second intra-cluster AWGRs 406B configured to facilitate communication between the plurality of second nodes 404B within the second node cluster 402B. Each second node 404B is also in communication with at least one second intra-cluster DSU 408B.

It will be appreciated that the network comprises further clusters 402, each being substantially similar to the first node cluster 402A and the second node cluster 402B.

As discussed above, the number of nodes supported by a network similar to the network 300 is ΛXY, because Y communication groups 308 can be supported, each communication group 308 having X racks 306 (as defined by the number of output ports of each node), and each rack 306 having Λ nodes. A node cluster of the network 400 is similar to the network 300. However, taking the first node cluster 402A as an example, since at least one port (e.g., an output port and corresponding input port) of a node 404A is used as an inter-cluster port, the number of ports that can be used for intra-cluster communication is reduced. If there are c inter-cluster ports, the number of nodes k in a node cluster is reduced to k = Λ(XY-c). Therefore, for a node cluster having Y = 4 communication groups (i.e., each node has 4 optical datapaths), X = 8 racks (i.e., each optical switch has 8 output ports), Λ = 64 supported by each AWGR, and c = 4 inter-cluster ports, the number of nodes k in the node cluster is k = 64(8 x 4 - 4) = 1792 nodes. However, additional scalability is provided by inter-cluster connectivity.

To facilitate inter-cluster connectivity, the network 400 also comprises at least one inter-cluster AWGR 410. Each of the at least one inter-cluster AWGR 410 is in optical communication with at least two inter-cluster nodes of different node clusters. The at least one inter-cluster AWGR 410 is configured to facilitate communication or connection between the at least two inter-cluster nodes of different node clusters. For example, the at least one inter-cluster AWGR 410 is in communication with at least one first inter-cluster node 404A and at least one second inter-cluster node 404B. The at least one inter-cluster AWGR 410 is configured to facilitate communication between the at least one first node 404A and the at least one second node 404B.

To communicate with the at least one inter-cluster AWGR 410, at least one first inter-cluster node 404A comprises at least one inter-cluster port (not shown) configured to facilitate a direct connection channel to the at least one inter-cluster AWGR 410. One inter-cluster port is required for communication with one inter-cluster AWGR 410. Similarly, at least one second inter-cluster node 404B comprises at least one inter-cluster port configured to facilitate a direct channel to the inter-cluster AWGR 410.

The network also comprises at least one inter-cluster DSU (not shown). The at least one inter-cluster DSU is substantially similar to an intra-cluster DSU 408, but is configured to provide inter-cluster instructions to a source inter-cluster node and a destination inter-cluster node in response to an inter-cluster request from the source inter-cluster node, the inter-cluster request being for connection from the source inter-cluster node in one node cluster to the destination inter-cluster node in another node cluster.

Figure 4B schematically illustrates an alternative representation of the optical circuit-switched network 400. This alterative representation is more granular than the representation of Figure 4A in that the first nodes 404A of the first node cluster 402A are represented in a similar manner to the nodes of Figure 3B. That is, the nodes are represented as a NIC including, or in communication with, a PIC. Each PIC in the illustrated example comprises 4 optical datapaths, each having a switch with 4 output ports. As can be seen in the left-most first node 404A, 2 optical datapaths (and 8 output ports) are adapted for inter-cluster communication via a plurality of inter-cluster AWGRs 410.

Every node 404 in the network 400 is in direct communication with every other node 404 in the same cluster 402 but is also in direct communication with at least one node 404 from every other cluster 402. Every node 404 in the network 400 is therefore also in indirect communication with every other node 404 in the network 400. For example, with reference to Figure 4A, a node 418 of the first cluster 402A can communicate with a node 420 in the second cluster 402B via a node 422 in the second cluster 402B that the node 418 is in direct communication with. To connect with the node 420, the node 418 can connect with the node 422 via an inter-cluster AWGR 410 by using the appropriate wavelength assigned to the node 422. Next, the node 422 connects with the node 420 via an intra-cluster AWGR 408B by using the appropriate wavelength assigned to the node 420. Thus, the first intra-cluster node 518 is in indirect communication with the second intra-cluster node 520, because an intermediate node is required for connection. Up to one intermediate node is required for connection to every other node in the network 400.

In an example implementation of the network 400, there are 8 node clusters. For a node cluster 502 having Y = 4 communication groups (i.e., each node has 4 electro-optic converters (modulators and photodetectors)), X = 8 racks (i.e., each optical switch attached to each electro-optic converter leading to 32 output ports), Λ = 64 wavelengths supported by each AWGR, and c = 16 inter-cluster ports, the number of nodes k in the node cluster is k = 64(8 x 4 - 16) = 1024 nodes per node cluster 502. A node cluster can communicate to c= #clusters =Λ*c = 64*16 = 1024 Therefore, the network 500 comprises #Total_Nodes= k*c = 1024 x 1024 = 1,048,576 nodes that can directly or indirectly communicate. Any ratio of number of nodes per cluster and number of cluster can be possible. Thus, it is clear that the scalability of the network 400 is greater than the network 300.

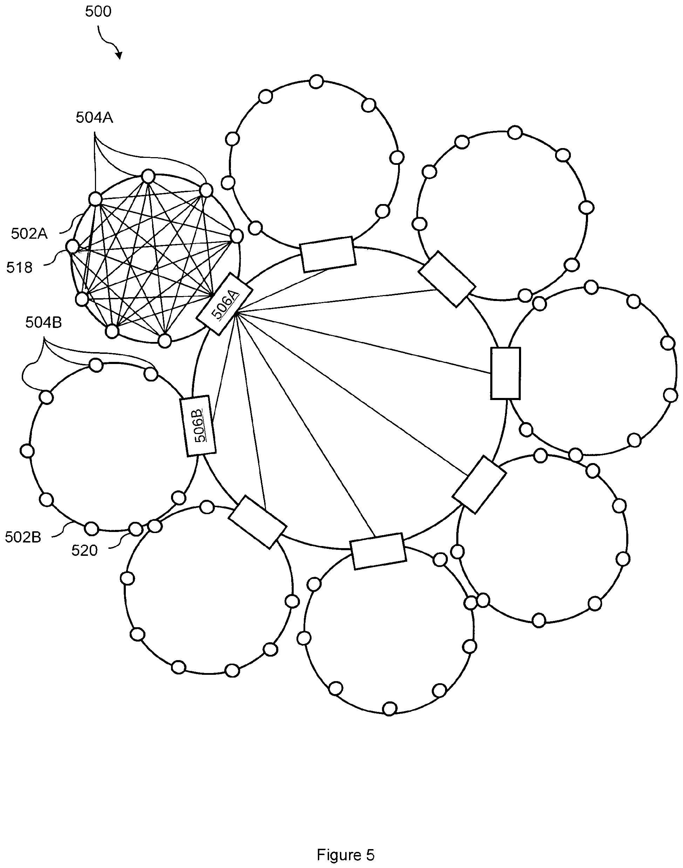

Figure 5 schematically illustrates a logical topology of an example optical circuit-switched network 500 according to the present invention. Similar to the network 400, the network 500 comprises a plurality of node clusters 502. A first node cluster 502A comprises a plurality of first nodes 504A and a second node cluster 502B comprises a plurality of second nodes 504B. As illustrated in the first node cluster 502A, each node 504A of the first node cluster 502A is in direct communication with every other node 504A of the first node cluster 502A via a plurality of intra-cluster AWGRs (not shown). Whilst not illustrated in Figure 5 for the sake of clarity, the same can be said for each of the plurality of node clusters 502. That is, each node 504 in a particular node cluster 502 is in direct communication with every other node 504 of that node cluster 502 via a plurality of intra-cluster AWGRs of that node cluster 502.

Each node cluster 502 comprises a single inter-cluster node 506 that is in communication with every inter-cluster node 506 of every other node cluster 502 via one or more inter-cluster AWGRs (not shown). Taking the first node cluster 502A and the second node cluster 502B as an example, the first node cluster 502A comprises a single first inter-cluster node 506A. Similarly, the second node cluster 502B comprises a single second inter-cluster node 506B. The first inter-cluster node 506A is configured to connect with the second inter-cluster node 506B via an inter-cluster AWGR (not shown).

Each inter-cluster node 506 comprises one or more inter-cluster ports (not shown). The number of inter-clusters ports required depends on the number of clusters and the number of wavelengths supported by each inter-cluster AWGR. For example, if there are Λ = 64 wavelengths supported by each inter-cluster AWGR, an additional inter-cluster port is required for each multiple of 64 clusters. If there are 64 clusters, only 1 inter-cluster port is required, because each cluster is assigned a respective wavelength.

As discussed above, every node 504 in the network 500 is in direct communication with every other node in the same cluster 502. In addition, every node 504 in the network 500 is in at least indirect communication with every other node 504 in the network 500. In an indirect communication, at least one "hop" is typically required for communication between two nodes. A hope may be understood as a communication between nodes that requires some form of electronic packet processing.

Taking a first intra-cluster node 518 of the first cluster 502A and a second intra-cluster node 520 of the second cluster 502B, the first intra-cluster node 518 can connect with the second intra-cluster node 520 by first connecting to the first inter-cluster node 506A via an intra-cluster AWGR by using the appropriate wavelength assigned to the first inter-cluster node 506A. Next, the first inter-cluster node 506A connects with the second inter-cluster node 506B via an inter-cluster AWGR by using the appropriate wavelength assigned to the second inter-cluster node 506B. Finally, the second inter-cluster node 506B connects with the second intra-cluster node 520 via an intra-cluster AWGR of the second cluster 502B by using the appropriate wavelength assigned to the second intra-cluster node 520. Thus, the first intra-cluster node 518 is in indirect communication with the second intra-cluster node 520, because one or more intermediate nodes are required for connection. Up to two intermediate nodes are required for connection, and up to two "hops" are required for connection.

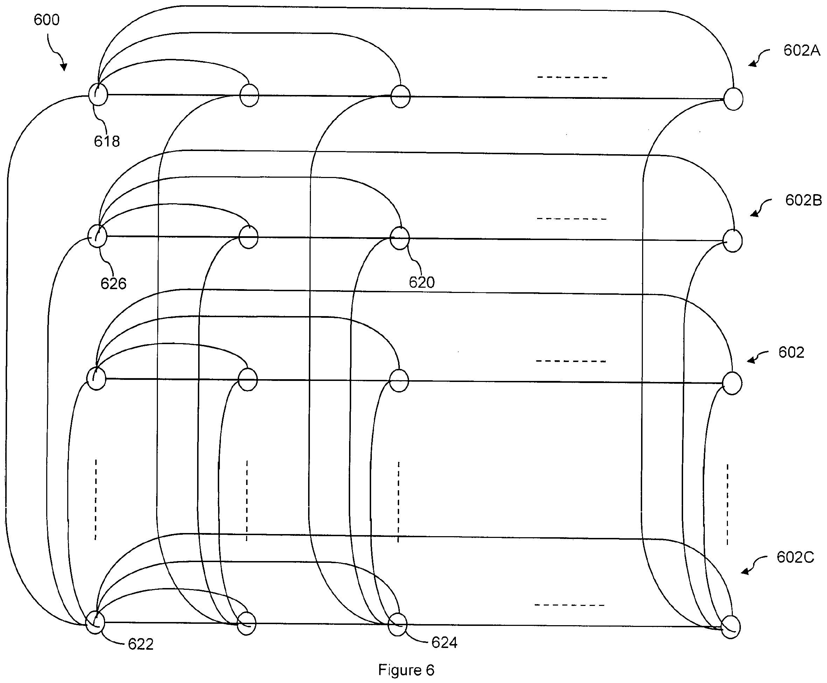

Figure 6 schematically an alternative example optical circuit-switched network 600 according to the present invention. Similar to the network 400, the network 600 comprises a plurality of node clusters 602. A first node cluster 602A comprises a plurality of first nodes and a second node cluster comprises a plurality of second nodes. As illustrated in the first node cluster 602A, each node of the first node cluster 602A is in direct communication with every other node of the first node cluster 602A via a plurality of intra-cluster AWGRs (not shown). Whilst not illustrated in Figure 6 for the sake of clarity, the same can be said for each of the plurality of node clusters 602. That is, each node in a particular node cluster 602 is in direct communication with every other node of that node cluster 602 via a plurality of intra-cluster AWGRs of that node cluster 602.

Figure 6 provides an illustration of the connections between nodes within the same node cluster and between different node clusters. In particular, the substantially horizontal lines illustrate intra-cluster between nodes within the same node cluster (via intra-cluster AWGRs), whilst the substantially vertical lines illustrate inter-cluster communication between nodes in different node clusters (via inter-cluster AWGRs).

In the embodiment of Figure 6, the plurality of node clusters comprises an inter-communication node cluster 602C. Each node 602C in the inter-communication node cluster 602C is adapted for inter-cluster communication with one node from every other node cluster. Therefore, each node 602 of every other node cluster is adapted for inter-cluster communication with one node 602C in the inter-communication node cluster 602C.

Taking a first node 618 of the first cluster 602A and a second node 620 of the second cluster 602B as an example, the first node 618 can connect with the second node 620. This is achieved by the first node 618 connecting to a first node 622 of the inter-communication node cluster 602C via an inter-cluster AWGR by using the appropriate wavelength assigned to the first node 622.

The first node 622 can connect to a second node 624 of the inter-communication node cluster 602C via an intra-cluster AWGR by using the appropriate wavelength assigned to the second node 624. The second node 624 can then connect to the second node 620 via an inter-cluster AWGR by using the appropriate wavelength assigned to the second node 620.

Alternatively, the first node 622 can connect to a connected node 626 of the second cluster 602B via an inter-cluster AWGR by using the appropriate wavelength assigned to the connected node 626. The node 626 can then connect to the second node 620 via an intra-cluster AWGR by using the appropriate wavelength assigned to the second node 620.

Thus, any two nodes in the network 600 are in at least indirect communication. Up to two intermediate nodes are required for connection between nodes, and up to two "hops" are required for connection between nodes.

In operation, an inter-cluster node (e.g., the first inter-cluster node 506A) acts as an intermediate node between a source node (e.g., the first intra-cluster node 518) in a first node cluster (e.g., the first node cluster 502A) and a destination node (e.g., the second intra-cluster node 520) in a second node cluster (e.g., the second node cluster 502B). The inter-cluster node is configured to receive an optical signal from the first node and transmit the optical signal to a further node.

Taking the node 100 depicted in Figure 1 as an example, the node 100 comprises an optical transceiver in that it utilises a photodetection device 116, such as a photodiode 116, that receives an optical signal and generates an electrical signal based on various properties of the received optical signal. As an inter-cluster node, the node 100 receives an optical signal comprising first data from the first node at the receiver portion and generates an electrical signal. The node 100 subsequently generates an output optical signal by encoding the first data onto light generated by the laser 106. Thus, some electronic packet processing is required.

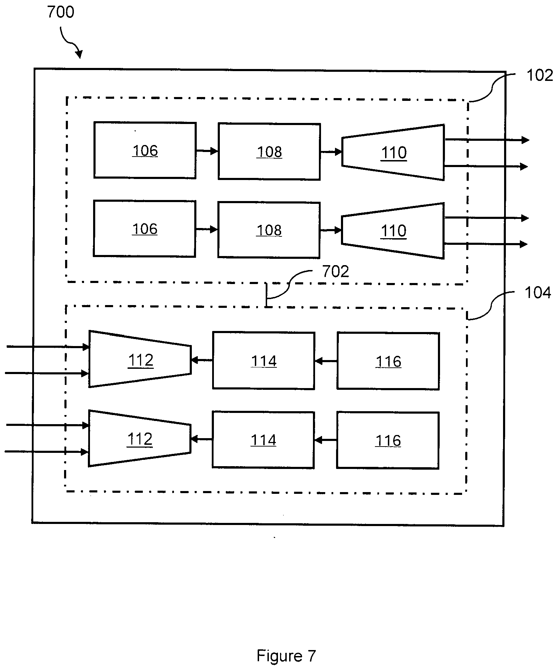

Figure 7 illustrates an alternative inter-cluster node 700 for use in an optical circuit-switched network according to the present invention. This inter-cluster node 700 is substantially similar to the node 100, but additionally comprises an optically switched path (or optical loopback) 702 from the receiver portion 104 to the transmit portion 102. This optical loopback facilitates data retransmission without the need for electronic packet processing. An optical signal received at a combiner 112 of any optical datapath in the receiver portion can be looped or bridged to any switch 110 of any optical datapath of the transmit portion 102. The inter-cluster node 700 is advantageous, because it removes the requirement for electronic "hops" between nodes of different clusters, because no electronic packet processing is required.

Networks that require the use of an intermediate node for connection between two nodes of different node clusters, such as the networks 500 and 600, can implement the control plane in different ways.

In some implementations, the intra-cluster DSUs and the inter-cluster DSUs do not communicate. In such implementations, each connection between nodes is considered by an appropriate intra-cluster DSU or inter-cluster DSU. Taking the communication between the nodes 518 and 520 of Figure 5 as an example, the first intra-cluster node 518 sends a connection request to an intra-cluster DSU of the first cluster 502A, requesting connection to the first inter-cluster node 506A. The intra-cluster DSU of the first cluster 502A treats this is an individual connection request, and does not take into account any further connection request in that communication. Next, the first inter-cluster node 506A sends a connection request to an inter-cluster DSU of the network 500, requesting connection to the second inter-cluster node 506B. Finally, the second inter-cluster node 506A sends a connection request to an intra-cluster DSU of the second cluster 502B, requesting connection to the intra-cluster node 520. Therefore, each step of the communication between the first intra-cluster node 518 and the second intra-cluster node 520 is treated as a separate communication.

In alternative implementations, at least one inter-cluster DSU of each node cluster is in communication with at least one intra-cluster DSU. The at least one intra-cluster DSU of a node cluster including a source node is configured, in response to a communication request from the source node indicative of a request for connection between the source node and the destination node, to communicate with the at least one inter-cluster DSU and the at least one intra-cluster DSU of a node cluster including a destination node to generate network resource instructions, the source node and the destination node being in indirect communication. Taking the communication between the node 518 (i.e., a source node) and the node 520 (i.e., a destination node) of Figure 5 as an example, the first intra-cluster node 518 sends an inter-cluster request to an intra-cluster DSU of the first node cluster 502A, the inter-cluster request being indicative of a request for connection between the first intra-cluster node 518 and the second intra-cluster node 520. The intra-cluster DSU communicates with an inter-cluster DSU and an intra-cluster DSU of the second node cluster 502B to generate network resource instructions. These network resource instructions comprise wavelength, optical communication pathway, and communication time. These network resource instructions are sent to each node in the optical communication pathway.

Alternatively, the first intra-cluster node 518 sends an intra-cluster request to an intra-cluster DSU of the first cluster 502A. The intra-cluster DSU establishes a time-limited circuit between the first intra-cluster node 518 and the first inter-cluster node 506A. The first inter-cluster node 506A sends an inter-cluster request to an inter-cluster DSU. The inter-cluster DSU establishes another time-limited circuit between the first inter-cluster node 506A and the second inter-cluster node 506B. The second inter-cluster node 506B sends an intra-cluster request to an intra-cluster DSU of the second cluster 502B. The intra-cluster DSU establishes a time-limited circuit between the second inter-cluster node 506B and the second intra-cluster node 520.

In this implementation in which at least one inter-cluster DSU of each node cluster is in communication with at least one intra-cluster DSU, the at least one inter-cluster DSU can share a common memory with the at least intra-cluster DSU of each node cluster. This can improve decision-making time at the DSUs and thereby reduce latency in the network.

The number of inter-cluster DSUs required in each of the above networks is the sum of nodes per dimension for each dimension.

## Claims

1. An optical circuit-switched network comprising:
a plurality of node clusters, each comprising a plurality of nodes including at least one inter-cluster node adapted for inter-cluster communication with at least one node from another node cluster, each node within a node cluster being in optical communication with a plurality of intra-cluster arrayed waveguide routers, AWGRs, configured to facilitate direct communication between nodes within the same node cluster, and each node within a node cluster being in communication with at least one intra-cluster data scheduling unit, DSU, configured to provide intra-cluster instructions to a source node and a destination node in response to an intra-cluster request from the source node, the intra-cluster request being for connection from the source node in a node cluster to the destination node in the same node cluster;
at least one inter-cluster AWGR, each being in optical communication with at least two inter-cluster nodes of different node clusters, the at least one inter-cluster AWGR being configured to facilitate direct communication between the at least two inter-cluster nodes of different node clusters; and
at least one inter-cluster DSU configured to provide inter-cluster instructions to a source inter-cluster node and a destination inter-cluster node in response to an inter-cluster request from the source inter-cluster node, the inter-cluster request being for connection from the source inter-cluster node in one node cluster to the destination inter-cluster node in another node cluster.

2. The network of claim 1, wherein every node of every node cluster is an inter-cluster node adapted for inter-cluster communication with one node from every other node cluster.

3. The network of claim 1, wherein only one node from every node cluster is an inter-cluster node adapted for inter-cluster communication with one node from every other node cluster.

4. The network of claim 1, wherein the plurality of networks comprises an inter-communication node cluster, wherein each node in the inter-communication node cluster is adapted for inter-cluster communication with one node from every other node cluster.

5. The network of any preceding claim, wherein each inter-cluster node adapted for inter-cluster communication comprises at least one inter-cluster output port and at least one inter-cluster input port configured for communication with the at least one inter-cluster AWGR.

6. The network of any preceding claim, wherein the inter-cluster nodes each comprise an optically switched path from a receiver portion to a transmit portion of the node.

7. The network of any preceding claim, wherein at least one intra-cluster DSU of each node cluster is in communication with at least one inter-cluster DSU.

8. The network of claim 7, wherein the at least one intra-cluster DSU of a node cluster including a source node and destination node is configured, in response to a communication request from the source node indicative of a request for connection between the source node and the destination node, to communicate with the at least one inter-cluster DSU and the at least one intra-cluster DSU of a node cluster including the destination node to generate network resource instructions.

9. The network of claim 8, wherein the network resource instructions comprising wavelength, optical communication pathway, and communication timing.

10. The network of any of claims 7 to 9, wherein at least one inter-cluster DSU shares a common memory with the at least one intra-cluster DSU of each node cluster.

11. The network of any preceding claim, wherein each inter-cluster DSU and each intra-cluster DSU comprises a primary DSU and a secondary DSU.

12. The network of any preceding claim, wherein each node comprises Y optical datapaths, each optical datapath being for connection to a respective communication group of nodes within the node cluster, and each optical datapath comprising X intra-node output ports and X intra-node input ports such that each communication group comprises X racks of up to Λ nodes, wherein Λ is the number of wavelengths that can be supported by each intra-cluster AWGR.

13. An optical circuit-switched network comprising:
a first node cluster comprising a plurality of first nodes, each being in optical communication with a plurality of first intra-cluster arrayed waveguide routers, AWGRs, configured to facilitate communication between the plurality of first nodes, and each being in communication with at least one first intra-cluster data scheduling unit, DSU, configured to provide communication instructions to one or more first nodes in response to respective one or more first intra-cluster requests from one or more first nodes, the one or more first intra-cluster requests being for connection from one first node among the plurality of first nodes to another first node among the plurality of first nodes;
a second node cluster comprising a plurality of second nodes, each being in optical communication with plurality of second intra-cluster AWGRs configured to facilitate communication between the plurality of second nodes, and each being in communication with at least one second intra-cluster DSU configured to provide communication instructions to one or more second nodes in response to respective one or more second intra-cluster requests from one or more second nodes, the one or more second intra-cluster requests being for connection from one second node among the plurality of second nodes to another second node among the plurality of second nodes;
at least one inter-cluster AWGR in optical communication with at least one first node and at least one second node, the at least one inter-cluster AWGR being configured to facilitate communication between the at least one first node and the at least one second node; and
at least one inter-cluster DSU configured to provide communication instructions to one or more first nodes and/or one or more second nodes in response to respective one or more inter-cluster requests from the one or more first nodes and/or the one or more second nodes, the one or more inter-cluster requests being for connection from one first node to one second node or one second node to one first node.

14. A method for communication in a network according to any of claims 1 to 12, the method comprising:
sending, by a source node, an intra-cluster request to an intra-cluster data scheduling unit, DSU, the intra-cluster request being for connection from the source node in a node cluster to a destination node in the same node cluster;
providing, by the intra-cluster DSU, intra-cluster instructions to the source node and the destination node;
connecting, via an intra-cluster AWGR, the source node to the destination node;
sending, by a source inter-cluster node to an inter-cluster DSU, an inter-cluster request for connection from the source inter-cluster node in one node cluster to a destination inter-cluster node in another node cluster;
providing, by the inter-cluster DSU, inter-cluster instructions to the source inter-cluster node and the destination inter-cluster node; and
connecting, via an inter-cluster AWGR, the source inter-cluster node to the destination inter-cluster node.

15. A method for communication in a network according to any of claim 13, the method comprising:
sending, by a first node of a first node cluster, an intra-cluster request to a first intra-cluster data scheduling unit, DSU, the intra-cluster request being for connection from a source first node among the plurality of first nodes to a destination first node among the plurality of first nodes;
providing, by the intra-cluster DSU, communication instructions to the source first node and the destination first node;
connecting, via a first intra-cluster AWGR, the source first node to the destination first node;
sending, by a source first node to an inter-cluster DSU, an inter-cluster request for connection from the source node to a destination second node of a second node cluster; and
providing, by the inter-cluster DSU, inter-cluster instructions to the source first node and the destination second node; and
connecting, via an inter-cluster AWGR, the source first node to the destination second node.
